# EUROPÄISCHE PATENTANMELDUNG

(11) **EP 0 909 912 A2**
(43) Veröffentlichungstag der Anmeldung: **21.04.1999**
(21) Anmeldenummer: 98119355.0
(22) Anmeldetag: 14.10.1998
(51) Int. Cl.: F16K 27/04

(54) **Mehrwegeventilgehäuse aus spritzgegossenem Kunststoff mit integrierten Führungselementen**

(30) Priorität: 16.10.1997 DE 19745802
(71) Anmelder: ROBERT BOSCH GMBH, 70442 Stuttgart (DE)
(72) Erfinder: Jungeilges, Rainer, 74232 Abstatt (DE)

(57) **Zusammenfassung**

Die Erfindung betrifft ein Mehrwegeventilgehäuse (1) aus spritzgegossenem Kunststoff mit einer Schieberbohrung, die von mehreren druckmittelführenden Kanälen (31-35) geschnitten oder gekreuzt wird und im Gehäuseinneren zumindest an einer Stelle als Schieberbohrung oder Teil hiervon ein Führungselement aufweist, dessen Werkstoff sich vom Grundwerkstoff des Ventilgehäuses unterscheidet. Das Ventilgehäuse (1) weist umspritzte Führungselemente (40,50) für den Ventilschieber (6) auf, die zumindest teilweise vom Grundwerkstoff ringsherum umschlossen sind und an ihrer Außenkontur zur axialen Fixierung jeweils mindestens eine ringförmige Nut oder eine zumindest bereichsweise ringförmige Erhebung aufweisen.

Die Anwendung der Inserttechnik zur Ausbildung einer Ventil- bzw. Steuerbohrung ermöglicht einteilige, einfach gestaltete Ventilgehäuse mit einer verschleißfesten und nahtfreien Lauffläche für die Dichtungen.

## Beschreibung

### Stand der Technik

Die Erfindung geht von einem Mehrwegeventilgehäuse aus spritzgegossenem Kunststoff mit integrierten Führungselementen nach dem Oberbegriff des Hauptanspruchs aus.

Aus der EP 0 152 620 B1 ist ein Wegeventil bekannt, das in einer Schieberbohrung, die von mehreren druckmittelführenden Kanälen geschnitten oder gekreuzt wird, im Gehäuseinneren zumindest an einer Stelle als Schieberbohrung oder Teil hiervon ein Führungselement aufweist, dessen Werkstoff sich vom Grundwerkstoff des Ventilgehäuses unterscheidet. Die Führungselemente sind Scheiben deren zentrale Bohrungen den Ventilschieber führen. Die nach dem Spritzgießen des Ventilgehäuses eingebauten Scheiben sitzen parallel zueinander in einer mehrstufigen Bohrung des Ventilgehäuses. Sie sind an den stufenförmigen Übergängen angelegt und festgeklebt.

### Vorteile der Erfindung

Das erfindungsgemäße Mehrwegeventilgehäuse in Kunststoffspritzgießtechnik weist umspritzte Führungselemente für den Ventilschieber auf, die zumindest in Teilbereichen vom Grundwerkstoff ringsherum umschlossen sind und an ihrer Außenkontur zur axialen Fixierung jeweils mindestens eine ringförmige Nut oder eine zumindest bereichsweise ringförmige Erhebung aufweisen. Derartige Erhebungen können auch durch jeweils einen Bund bzw. Durchmessersprung in den Stirnseiten der Führungselemente gebildet werden. Hierbei muß sich der Bund, der Durchmessersprung oder die ringförmige Erhebung nicht über den gesamten Außenumfang des Führungselements erstrecken.

Die Außenkontur, an der die ringförmige Nut oder die zumindest bereichsweise ringförmige Erhebung angeordnet ist, ist beispielsweise bei einem rohrförmigen bzw. buchsenartigen Führungselement die äußere Zylindermantelfläche.

Die Führungselemente werden aus einem metallischen Werkstoff hergestellt. Vor dem Spritzgießen werden sie in die Spritzgießform eingelegt und von Werkzeugstempeln an ihren künftigen Bestimmungsorten fixiert. Nach dem Spritzgießen sind die Führungselemente unlösbar mit dem Ventilgehäuse verbunden.

Die Anwendung der Inserttechnik zur Ausbildung einer Ventil- bzw. Steuerbohrung mit Steuerkanten ermöglicht einteilige, einfach gestaltete Ventilgehäuse. Die integrierten Führungselemente oder Ventilbuchsen lassen sich in einer kostengünstigen, reproduzierbaren Massenproduktion einsetzen. Da bei dieser Technik auf Stützringe verzichtet werden kann, ist ohne eine Änderung der Durchflußwerte eine kleinere, gewichtssparendere Bauweise möglich. Zudem können innenliegende Gehäuseausnehmungen im Führungselement, wie z.B. Einstiche, bezüglich ihrer Geometrie frei variiert werden, ohne daß die Entformbarkeit berücksichtigt werden muß. Ventilinterne Strömungsverhältnisse und Kanalgestaltungen müssen teilweise nicht mehr den Anforderungen an die Entformbarkeit geopfert werden.

Auch haben Mehrwegeventile mit diesen Führungselementen einen höheren Gebrauchswert. Da die gehäuseseitigen Steuerkanten übergangslos gerundet werden können, erhöht sich die Lebensdauer der im Schieberbereich verwendeten Dichtungen. Außerdem können aufgrund des metallischen Werkstoffes der Führungselemente im Steuerkanten- und Laufbereich der Dichtungen harte und verschleißfeste Oberflächen erzeugt werden, was sich positiv auf die Ventillebensdauer auswirkt.

Ferner kann durch die problemlose Verwendung von Einstichen im Bereich der Schieberbohrung das Außendichterprinzip angewandt werden, wodurch sich große, freie Querschnitte bei kleinen Steuerhüben ergeben.

Fertigungstechnisch erlaubt das Verfahren eine geringere Teileanzahl für die Montage, wodurch u.a. Lageraufwand und Montagekosten eingespart oder reduziert werden. Außerdem bedeuten weniger Montageschritte auch eine geringere Fehlerwahrscheinlichkeit.

### Zeichnungen

Weitere Einzelheiten der Erfindung ergeben sich aus den hier nicht zitierten Unteransprüchen und den Figurenbeschreibungen.
- Figur 1:: vertikaler Längsschnitt durch ein Mehrwegeventil mit metallischen Ventilbuchsen;
- Figur 2:: horizontaler Längsschnitt durch ein Mehrwegeventil mit metallischen Ventilbuchsen;
- Figur 3:: Querschnitt zu dem Mehrwegeventil nach Figur 1 und 2;
- Figur 4:: Schnitt durch eine alternative Endhülse.

### Beschreibung des Ausführungsbeispiels

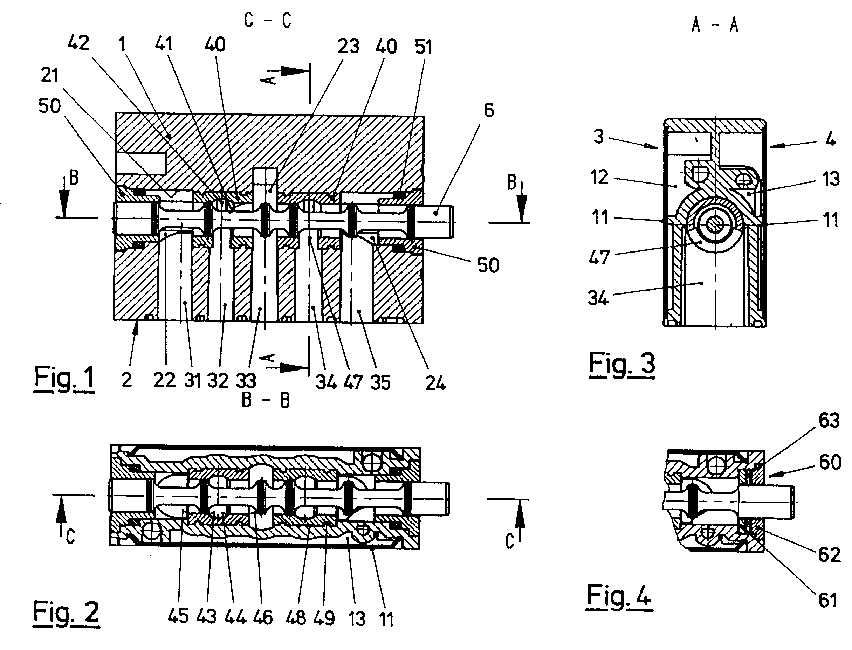

Die Figuren 1, 2 und 3 zeigen Schnitte durch ein Mehrwegeventilgehäuse (1) mit einem eingebauten Längsschieber (6). Der Längsschieber (6) sitzt in einer Schieberbohrung, die durch zwei Endhülsen (50) und zwei Ventilhülsen (40) gebildet wird. Die beiden baugleichen Endhülsen (50) sind Einbauteile, die nachträglich in die stufig ausgebildeten Enden der Gehäusehauptbohrung (21) des Ventilgehäuses (1) montiert werden. Sie sind jeweils mittels eines Dichtringes (51) gegenüber dem Ventilgehäuse (1) abgedichtet. Sie können auch durch Einpressen, Einkleben, warm Einbetten oder ähnliche Fügeverfahren im Ventilgehäuse (1) abgedichtet sein.

Die ebenfalls untereinander baugleichen Ventilbuchsen (40) bilden mit ihren Führungsbohrungen (41) die Führungs- und Dichtelemente der Schieberbohrung. In den Führungsbohrungen (41) wird der Längsschieber (6), der mehrere Dichtringe trägt, abgedichtet gleitend bewegt.

Die metallischen Ventilbuchsen (40) sind unlösbar im Ventilgehäuse (1) integriert. Sie werden vor dem Kunststoffspritzgießen des Ventilgehäuses (1) in die Spritzgußform eingelegt, um gegebenfalls fast vollständig umgespitzt zu werden. Die Öffnungen der Ventilbuchsen (40) werden hierbei z.B. mit Hilfe von Werkstückträgern der Spritzgußform verschlossen. Im Ausführungsbeispiel haben die Ventilbuchsen (40) einen Außendurchmesser, der geringfügig kleiner ist als der Durchmesser der benachbarten Bereiche (22, 23) der Gehäusehauptbohrung (21).

Um ein Lösen der eingespritzten Ventilbuchsen in der Bewegungsrichtung zu verhindern, haben diese in ihrer Außenkontur (48) hier zwei Ringnuten (49). Alternativ kann die in der Regel zylindrische Außenkontur (48) auch gerändelt sein, Umfangs- oder Querrillen aufweisen. Die Querrillen sind gegebenenfalls erforderlich für Ventilbuchsen, in denen Drehschieber bewegt werden.

Die Ringnuten (49) des Ausführungsbeispiels sind in der Nähe der Stirnseiten der Ventilbuchsen (40) angeordnet. Dort ist die Wandstärke der Ventilbuchsen (40) besonders groß und die Außenkontur (48) ist dort auf 360° des Umfangs zylindrisch. Der mittlere Bereich der Ventilbuchsen (40) ist dünnwandig, da die Führungsbohrung (41) dort durch eine zentrale Ringnut (42) erweitert ist. An den Übergangsstellen zwischen der Ringnut (42) und den beidseitig benachbarten Abschnitten der Führungsbohrung (41) sind die Fasen (43) und (44) ausgebildet. Auch die Übergangsstellen zwischen der Führungsbohrung (42) und den Stirnseiten der Ventilbuchsen (40) sind als Steuerkanten (45) und (46) geformt.

Im Bereich zwischen diesen Fasen (43, 44) haben die Ventilbuchsen (40) eine Öffnung (47), die jeweils einem Druckmittelkanal (32, 34) zugewandt ist. Die Öffnung (47) erstreckt sich in Längsrichtung der Ventilbuchse (40) annähernd über die Breite der Ringnut (42). Der Öffnungswinkel der Öffnung (47) beträgt in Umfangsrichtung hier ca. 150°.

Beim Ausführungsbeispiel sitzen die Endhülsen (60) und die Ventilbuchsen (40) auf Abstand. Die Abstände der Lücken zwischen den Endhülsen (60) und Ventilbuchsen (40) sowie zwischen den Ventilbuchsen (40) untereinander ist jeweils größer als der halbe Durchmesser des Längsschiebers (6). Jede Lücke stellt eine Ausnehmung (22, 23, 24) dar, die Teil der Gehäusehauptbohrung (21) ist. Die Endhülsen (50) reduzieren den Durchmesser der Gehäusehauptbohrung auf den Durchmesser der Führungsbohrungen (41), so daß eine Schieberbohrung mit einheitlichem Durchmesser und mindestens drei Ausnehmungen für ein 5/x-Wegeventil entsteht. In jede Ausnehmung mündet ein von der Gehäuseseite (2) kommender Druckmittelkanal (31, 33 und 35). Zwischen den Druckmittelkanälen mit den ungeraden Bezugszeichen (31, 33, 35) sind die zu den Öffnungen (47) führenden Druckmittelkanäle mit den geraden Bezugszeichen (32, 34) angeordnet.

Alternativ zu der Endhülse (50) kann auch eine mehrteilige Endhülse (60), vgl. Figur 4, mit einem innen dynamisch dichtenden Dichtelement (63) verwendet werden. Die Endhülse (60) besteht aus einer Scheibe (61) und einem Flanschdeckel (62). Zwischen beiden Teilen liegt ein scheibenförmiges Dichtelement (63). Der innere Dichtdurchmesser ist hierbei annähernd gleich dem Durchmesser der Führungsbohrung (41), so daß der Längsschieber (6) durch die Bohrung des Dichtelements (63) gleitet. Der Längsschieber (6) benötigt bei dieser Konstruktion im Bereich der Endhülse keinen Dichtring.

Die Außenkontur der Spritzgußgehäuseform ist in der Regel nicht quaderförmig ausgebildet. Die Seitenbereiche (3) und (4), vgl. die Figuren 2 und 3, weisen Ausnehmungen (12, 13) auf, die mit Hilfe von Seitendeckeln (11) verdeckt sind.

## Patentansprüche

1. Mehrwegeventilgehäuse aus spritzgegossenem Kunststoff mit einer Schieberbohrung, die von mehreren druckmittelführenden Kanälen geschnitten oder gekreuzt wird und im Gehäuseinneren zumindest an einer Stelle als Schieberbohrung oder Teil hiervon ein Führungselement aufweist, dessen Werkstoff sich vom Grundwerkstoff des Ventilgehäuses unterscheidet, dadurch gekennzeichnet,
- daß das oder die Führungselemente (40) zumindest in Teilbereichen vom Grundwerkstoff ringsherum umschlossen sind und
- daß das oder die Führungselemente (40) an ihrer Außenkontur (48) zur axialen Fixierung jeweils mindestens eine ringförmige Nut (49) oder eine zumindest bereichsweise ringförmige Erhebung aufweisen.

2. Mehrwegeventilgehäuse gemäß Anspruch 1, dadurch gekennzeichnet, daß die Führungselemente (40) aus einem metallischen Werkstoff sind.

3. Mehrwegeventilgehäuse gemäß Anspruch 1, dadurch gekennzeichnet, daß zumindest ein Führungselement (40) im Bereich seiner Führungsbohrung (41) eine mit Fasen (43, 44) versehene, innenliegende Ringnut (42) aufweist.

4. Mehrwegeventilgehäuse gemäß Anspruch 3, dadurch gekennzeichnet, daß das Führungselement (40) im Bereich der innenliegenden Ringnut (42) eine Öffnung (47) aufweist, in die ein druckmittelführender Kanal (32, 34) mündet.

5. Mehrwegeventilgehäuse gemäß Anspruch 1, dadurch gekennzeichnet, daß zumindest ein Führungselement (40) an mindestens einem Ende seiner Führungsbohrung (41) eine Steuerkante (45, 46) aufweist.

6. Mehrwegeventilgehäuse gemäß Anspruch 1, dadurch gekennzeichnet, daß mindestens zwei baugleiche Führungselemente (40) mit Abstand nebeneinander angeordnet sind.

7. Mehrwegeventilgehäuse gemäß Anspruch 4, dadurch gekennzeichnet, daß sich die Öffnung (47) im Führungselement (40) im Querschnitt gesehen im wesentlichen über dessen halben Umfang erstreckt.

8. Mehrwegeventilgehäuse nach einem der Ansprüche 1 bis 7, dadurch gekennzeichnet, daß es in den beiden stufenförmig ausgebildeten Enden einer Gehäusehauptbohrung (21) Endhülsen (50, 60) aufnimmt, die jeweils im Abstand von den Führungselementen (40) enden und Ausnehmungen (22, 24) bilden, in die Druckmittelkanäle (31, 35) radial geführt sind und daß die Endhülsen (50, 60) gleichachsig mit den Führungselementen (40) liegen und eine durchgehende Führungsbohrung (41) für den Längsschieber bilden.

9. Mehrwegeventilgehäuse nach einem der Ansprüche 6 bis 8, dadurch gekennzeichnet, daß die Ausnehmung (23) zwischen beiden Führungselementen (40), die Ausnehmungen (22, 24) zwischen letzteren (40) und den beiden Endhülsen (50, 60) sowie die beiden Ringnuten (42) in den Führungselementen (40) mit Druckmittelkanälen (31-35) zur Bildung eines Fünfwegeventils verbunden sind.

10. Mehrwegeventilgehäuse nach einem der Ansprüche 1 bis 9, dadurch gekennzeichnet, daß es einen Längsschieber (6) aufnimmt, der mehrere durch Einstiche voneinander getrennte, Dichtringe tragende Dichtstege aufweist.
